# EUROPÄISCHE PATENTSCHRIFT

(11) **EP 2 341 808 B1**
(45) Veröffentlichungstag und Bekanntmachung des Hinweises auf die Patenterteilung: **06.06.2012**
(21) Anmeldenummer: 09783084.8
(22) Anmeldetag: 16.09.2009
(51) Int. Cl.: A47J 45/06

(54) **GRIFF FÜR EIN KOCHGEFÄß**
HANDLE FOR A COOKING VESSEL
POIGNÉE POUR UN RÉCIPIENT DE CUISSON

(30) Priorität: 16.10.2008 DE 102008052028
(43) Veröffentlichungstag der Anmeldung: 13.07.2011
(73) Patentinhaber: WMF WÜRTTEMBERGISCHE METALLWARENFABRIK AG, 73309 Geislingen/Steige (DE)
(72) Erfinder: GEIGER, Martin, 73329 Kuchen (DE); REINHARD, Dieter, 73326 Deggingen (DE)
(74) Vertreter: BRP Renaud & Partner
(86) Internationale Anmeldenummer: PCT/EP2009/062010
(87) Internationale Veröffentlichungsnummer: WO 2010/043465

(56) Entgegenhaltungen:
- DE-B- 1 109 334
- DE-C- 530 761
- GB-A- 191 324 652

## Beschreibung

Die vorliegende Erfindung betrifft einen Griff für ein Kochgefäß gemäß dem Oberbegriff des Anspruchs 1. Die Erfindung betrifft außerdem ein, mit einem derartigen Griff ausgestattetes Kochgefäß.

Siehe die Druckschrift DE-B-1 109 334.

Um Griffe von Kochgefäßen auch möglichst während des Kochvorgangs auf erträglichen Temperaturen halten zu können, so dass diese gefahrlos angefasst werden können, werden üblicherweise hohle Metallgriffe verwendet, bei denen die im Hohlkörper des Metallgriffs vorhandene Luft als Isolator wirkt. Derartige Griffe sind dabei meist aus Rohren gebogen oder als Halbschalen gefertigt und müssen aufgrund ihrer Verwendung wasserdicht ausgeführt sein. Die wasserdichte Ausführung der hohlen Griffe ist dabei besonders beim Spülen von großer Wichtigkeit, da ansonsten Wasser eindringen und Rostprozesse begünstigen kann, welche das Kochgefäß langfristig schädigen. Um den innerhalb des hohlen Griffs gelegenen Hohlraum nach außen abdichten zu können, ist es bekannt, derartige Griffe bereichsweise zusammenzuquetschen oder mit einer Kappe zu versehen und anschließend zuzuschweißen. Die bekannten Techniken zum Abdichten des im hohlen Griffs gelegenen Hohlraums sind dabei jedoch einerseits teuer und aufwendig und führen andererseits nicht immer zu einer vollständigen Abdichtung, so dass trotz des Verquetschens bzw. Verschweißens Wasser in den hohlen Griff eindringen kann und dort Rostprozesse in Gang setzt.

Die vorliegende Erfindung beschäftigt sich mit dem Problem, für einen Griff der gattungsgemäßen Art, eine verbesserte Ausführungsform anzugeben, welche sich insbesondere durch ein kostengünstiges, konstruktiv einfaches und darüber hinaus wirkungsvolles Abdichten eines im Griff gelegenen Hohlraums auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, bei einem Griff für ein Kochgefäß mit einem, einen Hohlraum aufweisenden Griffkörper, ein Dichtelement aus Kunststoff vorzusehen, welches derart ausgebildet ist, dass es nach einem Einschieben in den Hohlraum des Griffkörpers diesen nach außen dicht verschließt. Der Griff kann darüber hinaus einen Flanschbereich zum Anbinden desselben an das Kochgefäß aufweisen, wobei das Dichtelement üblicherweise vom Flanschbereich aus in den Hohlraum des Griffkörpers eingeschoben wird. Dabei ist vorzugsweise die lichte Weite des Hohlraums des Griffkörpers auf eine Außenabmessung des Dichtelements abgestimmt, wobei die Außenabmessungen des Dichtelements vorzugsweise geringfügig größer ist als die lichte Weite des Griffkörpers, so dass das Dichtelement unter Spannung in den Hohlraum des Griffkörpers eingeschoben bzw. eingepresst werden kann und dort derart komprimiert zu liegen kommt, dass ein Eindringen, bspw. von Wasser, in den Hohlraum des Griffkörpers zuverlässig unterbunden werden kann. Darüber hinaus sind derartige aus Kunststoff ausgebildete Dichtelemente äußerst kostengünstig und in nahezu beliebiger Form herzustellen, so dass deutliche Kostenvorteile im Vergleich zu aus dem Stand der Technik bekannten Abdichtungstechniken, wie bspw. dem Verquetschen oder Verschweißen, realisiert werden können. Von besonderem Vorteil ist darüber hinaus, dass Kunststoffe bezüglich ihrer Eigenschaften an nahezu sämtliche auftretende Anforderungen anpassbar sind, so dass sich für derartige Dichtelemente ein breites Anwendungsspektrum öffnet.

Bei einer vorteilhaften Weiterbildung der erfindungsgemäßen Lösung, ist der für das Dichtelement verwendete Kunststoff hitzebeständig und spülmaschinenfest, insbesondere aus einem Elastomer ausgebildet. Da Kochgefäße üblicherweise hohen Temperaturen sowie unter Umständen aggressiven Umgebungsbedingungen, wie bspw. in einer Spülmaschine, ausgesetzt sind, müssen sämtliche Komponenten des Kochgefäßes, dies gilt selbstverständlich auch für das Dichtelement, diesen schwierigen Umgebungsbedingungen auch über längere Zeit standhalten können. Die hierfür eingesetzten Kunststoffe, bspw. Elastomere, sind dabei formfeste, aber elastisch verformbare Kunststoffe, deren Glasübergangspunkt sich unterhalb der Raumtemperatur befindet. Aus diesem Grund werden insbesondere Elastomere daher häufig für Dichtungen eingesetzt, da sie ihre elastische und damit dichtende Eigenschaft selbst bei Raumtemperatur entfalten können.

Bei einer vorteilhaften Weiterbildung der erfindungsgemäßen Lösung, weist das Dichtelement einen Kopf oder einen Kragen auf, mit welchem es bei Erreichen ein Schubendlage am Flanschbereich des Griffs anliegt. Das Dichtelement weist somit eine Art Korkenform auf, die ein zu weites Einschieben desselben in den Hohlraum des Griffkörpers verhindert, da beim Erreichen der Einschubendlage der radial nach außen abstehende Kragen am Flanschbereich bzw. am Griffkörper anliegt und dadurch ein unbeabsichtigtes weiteres Einschieben verhindert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen Griff mit zwei erfindungsgemäßen Dichtelementen aus Kunststoff,
- Fig. 2: eine Schnittdarstellung des in Fig. 1 gezeigten Griffs,

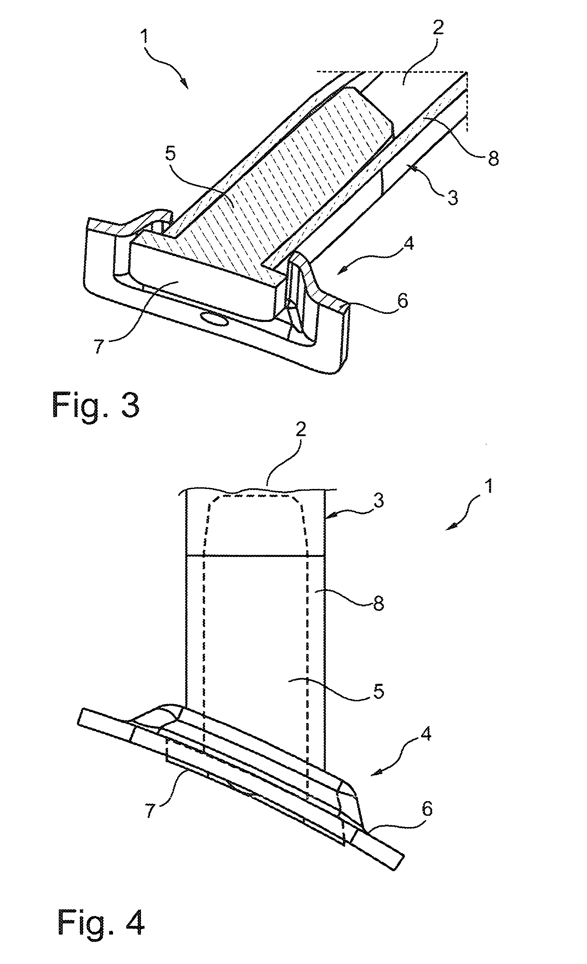

- Fig. 3: eine Schnittdarstellung eines Flanschbereichs des Griffs,
- Fig. 4: eine Detaildarstellung des Flanschbereichs des Griffs.

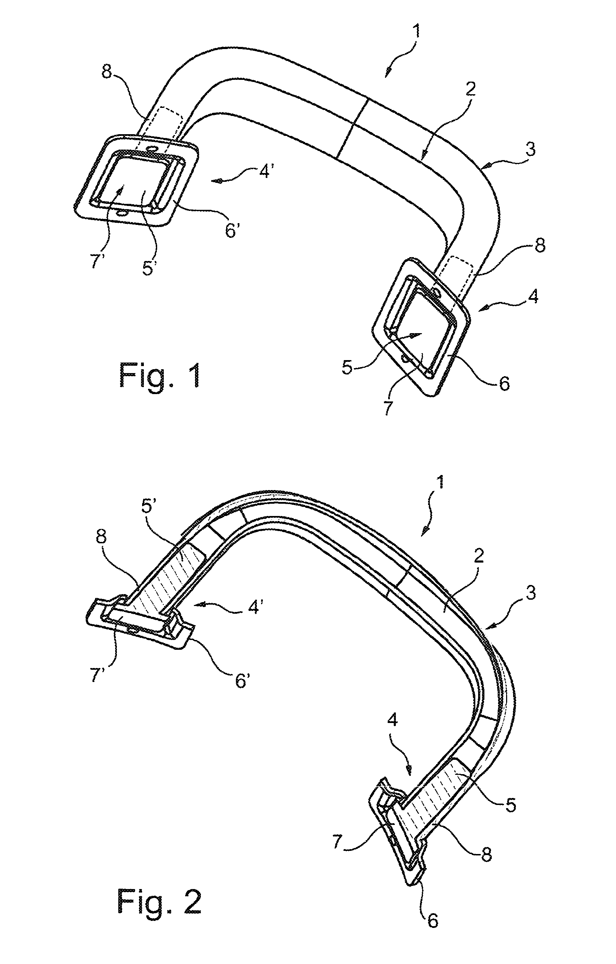

Entsprechend der Fig. 2, weist ein erfindungsgemäßer Griff 1 für ein nicht dargestelltes Kochgefäß, einen, einen Hohlraum 2 aufweisenden Griffkörper 3 sowie zwei Flanschbereiche 4 und 4' zum Anbinden des Griffs 1 an das Kochgefäß auf. Der Griffkörper 3 ist dabei hohl ausgebildet, wobei die im Hohlraum 2 enthaltene Luft als Isolator wirkt und dazu beiträgt, den Griff 1 auch bei einem Kochvorgang nicht zu stark zu erhitzen, so dass insbesondere bei einem Anfassen des Griffs 1 keine Verbrennungsgefahr besteht. Um insbesondere ein Eindringen von Wasser in den Hohlraum 2 verhindern zu können, ist erfindungsgemäß zumindest ein Dichtelement 5 (gemäß den Fig. 1 und 2 je zwei Dichtelemente 5 und 5') vorgesehen, das so ausgebildet ist, dass es vom Flanschbereich 4, 4' aus in den Hohlraum 2 des Griffkörpers 3 einschiebbar ist und dabei den Hohlraum 2 nach außen dicht abschließt. Hierzu ist eine Außenabmessung des Dichtelements 5 zumindest geringfügig größer als eine lichte Weite des Hohlraums 2 im Flanschbereich 4, 4', so dass das Dichtelement 5, 5' unter Spannung in den Hohlraum 2 eingedrückt werden kann und dort selbstklemmend fixiert ist.

Das Dichtelement 5, 5' ist dabei aus Kunststoff, insbesondere aus einem hitzebeständigen und spülmaschinenfesten Kunststoff ausgebildet und erträgt dadurch die beim Betrieb des Kochgefäßes üblicherweise auftretenden Temperaturen problemlos. Als besonders bevorzugter Kunststoff kann für das Dichtelement 5, 5' ein Elastomer eingesetzt werden. Bei am Kochgefäß befestigtem Griff 1, ist das Dichtelement 5, 5' von einem Anbindungsflansch 6, 6' des Flanschbereichs 4, 4' überdeckt und daher von außen nicht sichtbar.

Bei einer bevorzugten Ausführungsform der erfindungsgemäßen Lösung, weist das Dichtelement 5, 5' einen Kopf oder einen Kragen 7, 7' auf, mit welchem es bei Erreichen seiner Einschubendlage an einer den Hohlraum 2 begrenzenden Wandung 8 oder am Flanschbereich 4, 4' anliegt und dadurch ein zu weites Einschieben des Dichtelements 5, 5' in den Hohlraum 2 verhindert. Generell sind derartige, aus Elastomer ausgebildete, Dichtelemente 5, 5' in nahezu beliebiger Ausführungsform und kostengünstig herstellbar und bieten eine hohe Sicherheit gegenüber einem unerwünschten Eindringen von Wasser in den Hohlraum 2, was dort auf lange Sicht gesehen zu Rostprozessen und damit zu einer Zerstörung des Kochgefäßes bzw. des Griffs 1 führen kann. Der Griffkörper 3 kann dabei bspw. aus einem Rohr gebogen oder aus zumindest zwei Halbschalen zusammengebaut sein.

Denkbar ist ein Einsatz derartiger Dichtelemente auch bei so genannten Drahtgriffen, welche üblicherweise einen massiven Griffkörper aufweisen, der im Bereich eines Anbindungsflansches an ein Kochgefäß bspw. von einem derartigen Dichtelement umfasst wird, so dass auch hier ein Eindringen von Wasser zuverlässig vermieden werden kann. Darüber hinaus kann das Dichtelement 5, 5', insbesondere für den Fall, dass es von außen sichtbar ist, zusätzlich als Designelement bzw. Unterscheidungsmerkmal für verschiedene Produktlinien ausgestaltet sein. Dabei ist eine fast frei Farbgebung der Elastomere bei der Verwendung als Designelement möglich.

Mit den erfindungsgemäßen Dichtelementen 5, 5' kann ein Hohlraum 2 des Griffkörpers 3 wirkungsvoll nach außen abgedichtet werden, so dass in diesem üblicherweise durch eindringendes Wasser auftretende Rostprozesse zuverlässig ausgeschlossen werden können. Dabei versteht sich von selbst, dass der Griff 1 nicht über zwei Anbindungsflansche 6 und 6' an dem Kochgefäß angebunden sein kann, sondern bspw. auch lediglich über einen, wodurch er als so genannter Stielgriff ausgebildet ist. Insbesondere kann durch die Verwendung derartiger Dichtelemente 5, 5' ein aufwendiges, teures und nicht unbedingt prozesssicheres Verquetschen bzw. Verschweißen der Hohlräume 2 am Flanschbereich 4, 4' ersetzt werden.

## Patentansprüche

1. Griff (1) für ein Kochgefäß mit einem, einen Hohlraum (2) aufweisenden Griffkörper (3) und zumindest einem Flanschbereich (4,4') zum Anbinden des Griffs (1) an das Kochgefäß,
**dadurch gekennzeichnet,**
**dass** zumindest ein Dichtelement (5,5') aus Kunststoff vorgesehen ist, welches so ausgebildet ist, dass es vom Flanschbereich (4,4') aus in den Hohlraum (2) des Griffkörpers (3) einschiebbar ist und dabei den Hohlraum (2) nach außen dicht verschließt.

2. Griff nach Anspruch 1,
**dadurch gekennzeichnet,**
**dass** der für das Dichtelement (5,5') verwendete Kunststoff hitzebeständig und spülmaschinenfest, insbesondere aus einem Elastomer, ausgebildet ist.

3. Griff nach Anspruch 1 oder 2,
**dadurch gekennzeichnet,**
**dass** das Dichtelement (5,5') einen Kopf oder einen Kragen (7,7') aufweist, mit welchem es bei Erreichen seiner Einschubendlage am Flanschbereich (4,4') oder an einer Wandung (8) des Griffs (1) anliegt.

4. Griff nach einem der Ansprüche 1 bis 3,
**dadurch gekennzeichnet,**
**dass** der Griff (1) zwei Flanschbereiche (4,4') und zwei Dichtelemente (5,5') aufweist.

5. Kochgefäß, insbesondere ein Kochtopf oder eine Pfanne, mit einem Griff (1) nach einem der Ansprüche 1 bis 4.

## Claims

1. A handle (1) for a cooking vessel, comprising a handle body (3) encompassing a cavity (2), and at least one flange area (4, 4') for fastening the handle (1) to the cooking vessel,
**characterized in**
**that** provision is made for at least one sealing element (5, 5') made of plastic, which is embodied such that it can be inserted into the cavity (2) of the handle body (3) from the flange area (4, 4') and thereby tightly closes the cavity (2) towards the outside.

2. The handle according to claim 1,
**characterized in**
**that** the plastic used for the sealing element (5, 5') is embodied so as to be heat-resistant and dishwasher-safe, in particular made of an elastomer.

3. The handle according to claim 1 or 2,
**characterized in**
**that** the sealing element (5, 5') encompasses a head or a collar (7, 7'), by means of which it abuts on the flange area (4, 4') or on a wall (8) of the handle (1) upon reaching its final insertion position.

4. The handle according to one of claims 1 to 3, **characterized in**
**that** the handle (1) encompasses two flange areas (4, 4') and two sealing elements (5, 5').

5. A cooking vessel, in particular a cooking pot or a pan, comprising a handle (1) according to one of claims 1 to 4.

## Revendications

1. Poignée (1) pour un récipient de cuisson avec un corps de poignée (3) comprenant une cavité (2) et au moins une zone de bride (4, 4') pour relier la poignée (1) au récipient de cuisson, **caractérisée en ce qu'**il est prévu au moins un élément d'étanchéité (5.5') en matière plastique qui est conçu de sorte à être insérable à partir de la zone de bride (4, 4') dans la cavité (2) du corps de poignée (3) et à fermer à cet effet la cavité (2) de manière étanché sur l'extérieur.

2. Poignée selon la revendication 1, **caractérisée en ce que** la matière plastique utilisée pour l'élément d'étanchéité (5, 5') est thermorésistante et résistante au lave-vaisselle, **en ce qu'**elle est notamment conçue en un élastomère.

3. Poignée selon la revendication 1 ou 2, **caractérisée en ce que** l'élément d'étanchéité (5, 5') comporte une tête ou un col (7, 7'), avec laquelle (lequel), à l'atteinte de sa position d'insertion extrême, il est adjacent à la zone de bride (4, 4') ou à une paroi (8) de la poignée (1).

4. Poignée selon l'une quelconque des revendications 1 à 3, **caractérisée en ce que** la poignée (1) comporte deux zones de brides (4, 4') et deux éléments d'étanchéité (5, 5') .

5. Récipient de cuisson, notamment un faitout ou une poêle avec une poignée (1) selon l'une quelconque des revendications 1 à 4.
